# FASCICULE DE BREVET EUROPEEN

(11) **EP 0 807 752 B1**
(45) Date de publication et mention de la délivrance du brevet: **13.08.2003**
(21) Numéro de dépôt: 97401076.1
(22) Date de dépôt: 15.05.1997
(51) Int. Cl.: F02K 1/70

(54) **Inverseur de poussée de turboréacteur à portes associées à un panneau amont**
Schubumkehrvorrichtung mit beweglichen Auskleidungen in den Klappen
Thrust reverser of the pivoting door type with a moveable liner pannel

(30) Priorité: 15.05.1996 FR 9606046
(43) Date de publication de la demande: 19.11.1997
(73) Titulaire: Hurel Hispano Le Havre, 76700 Harfleur (FR)
(72) Inventeur: Gonidec, Patrick, 76290 - Montivilliers (FR); Rouyer, Pascal Gérard, 76430 - Saint Aubin Routot (FR); Vauchel, Guy Bernard, 76610 - Le Havre (FR)
(74) Mandataire: Berrou, Paul

(56) Documents cités:
- EP-A- 0 761 957
- US-A- 3 598 318
- US-A- 3 601 992
- US-A- 3 831 376

## Description

La présente invention concerne un dispositif d'inversion de poussée de turboréacteur à double flux. Le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autres cas, la paroi externe ne canalise que le flux secondaire, dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la traînée de l'ensemble propulsif. Ceci est notamment le cas pour des ensembles propulsifs rapportés sur l'extérieur d'aéronef, particulièrement lorsque ces ensembles propulsifs sont attachés sous les ailes ou à l'arrière du fuselage.

Nous appellerons capotage extérieur l'ensemble constitué par la paroi extérieure de la nacelle.

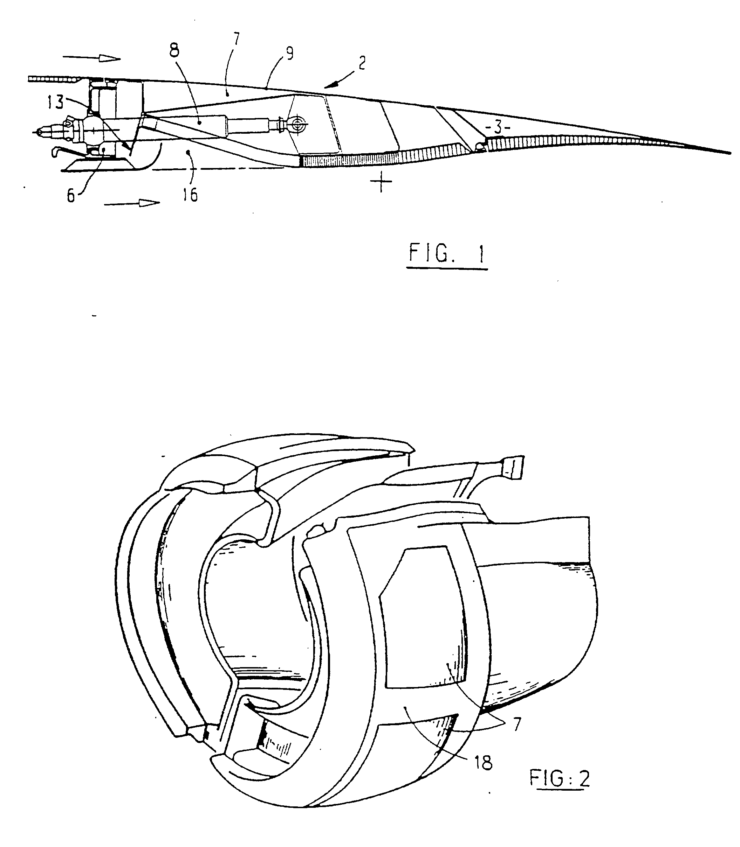

La figure 1 des dessins joints montre un exemple connu de réalisation d'un inverseur de poussée de ce type, appliqué comme le montre la vue schématique partielle en perspective de la figure 2, à un turboréacteur à double flux.

Le dispositif d'inversion est constitué de portes 7 formant une partie mobile 2 et constituant en position inactive, lors d'un fonctionnement en jet direct, une partie du capotage extérieur, et d'une structure fixe réalisant ce capotage extérieur en amont des portes, par une partie amont 1 en aval des portes par une partie aval 3 et entre les portes 7 par l'intermédiaire de poutres 18 qui relient la partie aval 3 du capotage extérieur à la partie amont 4 du capotage extérieur. Les portes 7 sont montées sur une circonférence du capotage extérieur et sont montées pivotantes dans une zone intermédiaire de leurs parois latérales sur les poutres 18 situées de part et d'autre de ces portes, ces parois latérales constituant avec les parois amont et aval, les parois qui relient la partie extérieure 9 des portes 7, qui constituent une partie de la paroi extérieure de la nacelle, à la partie intérieure 11 des portes 7, qui constituent une partie de la paroi extérieure du conduit.

La partie amont 1 de structure fixe comporte un cadre avant 6 qui sert de support aux moyens de commande des déplacements des portes 7, constitués par exemple par des vérins 8.

En position activée, les portes 7 basculent de telle façon que la partie des portes situées en aval des pivots, vient obstruer plus ou moins totalement le conduit, et de telle façon que la partie amont des portes vient dégager un passage dans le capotage extérieur de manière à permettre au flux secondaire d'être canalisé radialement par rapport à l'axe du conduit. La partie amont des portes 7 fait saillie à l'extérieur du capotage extérieur pour des raisons de dimensionnement du passage qui doit être capable de laisser passer ce flux sans compromettre le fonctionnement du moteur. L'angle de pivotement des portes est ajusté de manière à permettre le passage du flux et de manière à supprimer la poussée de ce flux, voire à commencer à générer une contre poussée en générant une composante du flux dévié vers l'amont.

Les portes 7 sont également munies dans leur partie amont d'un becquet 13 faisant saillie vers l'avant, lorsque les portes 7 sont déployées, par rapport à la face interne des portes, de manière à dévier le flux vers l'amont et achever d'obtenir la composante de contre poussée.

Des exemples connus de réalisation sont illustrés par exemple par FR 1 482 538 ou par FR-A-2 030 034.

Il existe aussi des dispositifs tels que celui décrit par US 3 605 411 qui permettent d'avoir une saillie de becquet vers l'amont lorsque les portes sont déployées tout en permettant une continuité de la paroi externe du conduit lorsque les portes ne sont pas déployées. On connaît également par FR-A-2 618 853 un dispositif où le becquet est escamoté en jet direct de façon à optimiser les performances du moteur.

Dans certaines applications, comme représenté sur la figure 1, les becquets 13 font saillie par rapport à la face interne 11 des portes 7, même en jet direct sans pour autant faire saillie dans le conduit qui est dans cet exemple muni de cavités 5 légèrement préjudiciables aux performances du moteur alors que le dispositif d'inversion devient extrêmement simple.

La combinaison des becquets et des bords de déviation permettent également d'optimiser la direction d'éjection du flux comme indiqué par FR-A-2 680 547.

Enfin la commande des portes d'une position à une autre par vérin est connue en soi, nous noterons cependant la solution très simple où il y a un vérin par porte fixé dans sa partie amont à la structure fixe amont du capotage extérieur, et dans sa partie aval à la porte en un point situé dans la partie amont comme décrit par exemple par FR 1 482 538.

Le type d'inverseur de poussée décrit ci-dessus a l'inconvénient majeur que, pour des raisons imposées par des contraintes de dimensionnement aérodynamique du passage du flux dans les passages dégagés par la partie amont de ces portes, la pression du conduit exerce sur ces portes une action qui tend à les ouvrir, en effet, la section totale de ces passages doit être supérieure à la section du conduit dans un plan situé en amont des portes, ceci à cause des pertes en charge engendrées par la déviation du flux, ceci dans le cas où la section de fuite (partie aval du conduit non obstruée par la partie aval des portes), est minimisée de façon à obtenir une contre poussée convenable.

L'inconvénient majeur décrit ci-dessus se traduit suivant les deux aspects suivants :
- le fait que les portes tendent à s'ouvrir est un inconvénient du point de vue de la sécurité. Des portes sur lesquelles l'action de la pression tendrait à les maintenir fermées (non déployées), rendrait le dispositif plus sur, de même que des portes sur lesquelles l'action de la pression tendrait à les refermer lorsque celles-ci sont dans une position telle que la poussée n'est pas encore inversée, même si elle est partiellement détruite (nous reviendrons sur ce dernier point)
- l'action de la pression sur les portes est dans certains exemples connus telle que dans certains cas à prendre en compte dans le dimensionnement de l'inverseur, des efforts très importants transitent dans les vérins entre leurs points d'attache sur la partie amont de la structure fixe et sur les portes. Il en résulte une masse importante de la structure, du système de commande des portes et de verrouillage de celles-ci, et des portes elles-mêmes.

L'objet de l'invention est de proposer un moyen qui permet d'accroître la sécurité et/ou de réduire la masse de ce type d'inverseur ou en améliorer les performances en jet inversé.

EP-A-0 413 635 décrit un inverseur à portes associées à un panneau amont à pivots fixes situés dans les parties latérales ou poutres de la structure fixe de l'inverseur et entraîné par la porte au moyen d'un organe de liaison ou bielle dans le même sens de rotation que lesdites portes.

Cette disposition a l'inconvénient majeur de faire "bouclier" au flux en mode jet inversé et de ne pas permettre un guidage optimal du flux. Les buts sont atteints conformément à l'invention par un inverseur de poussée à portes pivotantes du type précité caractérisé en ce que le panneau amont est supporté et relié d'une part par au moins une bielle à la structure fixe de l'inverseur et d'autre part par au moins une bielle à la porte associée de manière que les faces du panneau amont dans toutes les phases de fonctionnement conservent une orientation parallèle aux nappes du flux en contact avec ledit panneau.

D'autres caractéristiques et avantages de l'invention seront mieux compris à la lecture de la description qui va suivre des modes de réalisation de l'invention en référence aux dessins annexés sur lesquels :
- la figure 1 représente une demi-vue schématique en coupe longitudinale par un plan passant par l'axe de rotation d'un turboréacteur associé, d'un inverseur de poussée à portes pivotantes, en position fermée, d'un type connu et qui a fait précédemment l'objet d'une description ;
- la figure 2 représente une vue schématique en perspective d'un inverseur de poussée du type précité montré en position monté et avec les portes fermées ;
- la figure 3 représente, dans une vue analogue à celle de la figure 1, un inverseur de poussée à portes pivotantes, en position de jet direct, selon un premier mode de réalisation de l'invention ;
- la figure 4 représente le principe défini sur la figure 3 en position de jet inversé ;
- les figures 5, 7, 9 et 11 représentent dans une vue analogue à celle de la figure 1 des variantes de réalisation de l'invention, en position de jet direct ;
- les figures 6, 8, 10 et 12 représentent l'inverseur de poussée représenté sur les figures 5, 7, 9 et 11 en position de jet inversé ;
- la figure 13 représente, selon une vue analogue à celle des figures 1 et 3 un inverseur de poussée à portes pivotantes, en position de jet direct, selon un deuxième mode de réalisation de l'invention ;
- la figure 14 représente le principe défini sur la figure 13 en position jet inversé ;
- la figure 15 représente une section transversale du principe défini sur les figures 3 et 4,
- la figure 16 représente une section transversale analogue à la figure 15, selon une variante de réalisation ;
- la figure 17 représente une section transversale analogue à la figure 15, selon une variante de réalisation ;
- la figure 18 représente une section transversale du principe défini sur les figures 13 et 14 ;
- la figure 19 représente un exemple de réalisation de panneau amont de l'inverseur de poussée conforme à l'invention ;
- la figure 20 représente une section transversale du principe défini sur la figure 19 ;

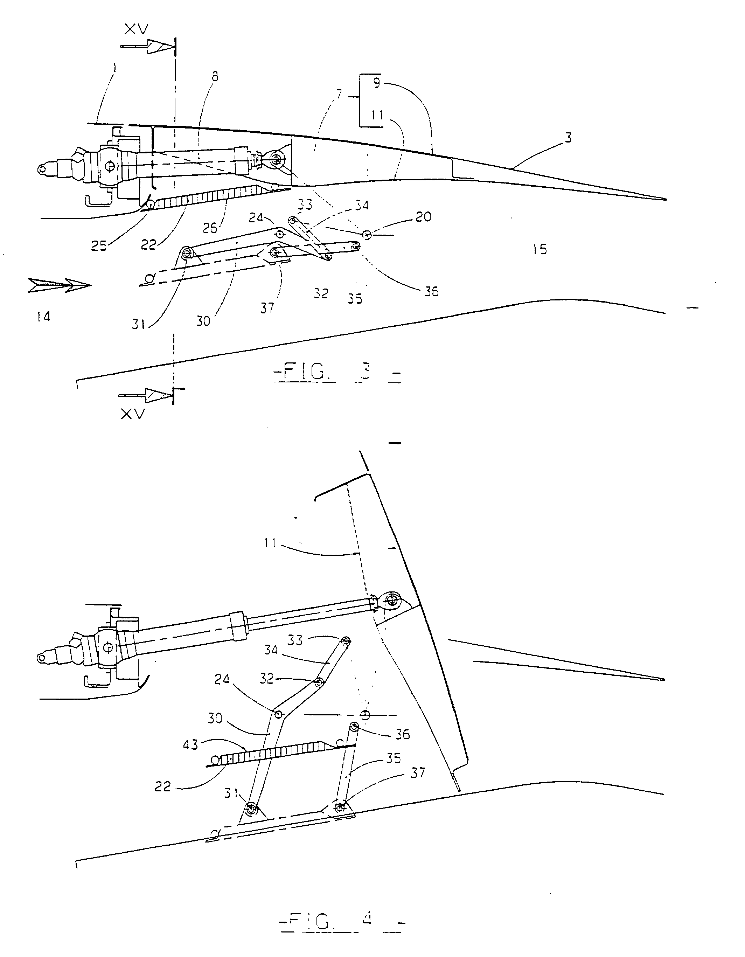

Selon un premier mode de réalisation de l'invention représenté sur les figures 3 et 4, un inverseur de poussée susceptible d'effectuer dans les phases de vol pertinentes d'un avion une inversion de flux du turboréacteur associé comporte les parties principales connues et précédemment décrites dans un exemple connu de réalisation, en référence aux figures 1 et 2. On retrouve notamment la structure fixe amont 1, les portes 7 comportant la partie extérieure 9, la partie intérieure 11, un becquet 13 et associées à un vérin de commande 8, et la partie aval 3.

Comme précédemment décrit selon EP-A-0 413 635, le lissage de veine en jet direct est obtenu au moyen d'un panneau amont 22 dont la paroi interne 26 forme une partie de la veine externe du canal annulaire 15.

L'étanchéité est assurée par un joint 25 placé entre le panneau amont 22, une partie de la structure fixe 1 et une partie de la porte 7. Les exemples montrés représentent ce joint installé sur le panneau amont 22 mais il faut noter qu'un montage inversé peut être aussi utilisé, c'est à dire que la partie de la structure fixe 1 et la partie de la porte 7 peuvent recevoir et contenir, dans une position permettant la continuité des lignes, le ou les joints.

Le panneau 22 est retenu et manoeuvré par un ou des jeux de palonnier 30 et bielle 35. Leurs points pivots 24 et 36 sont placés sur la structure fixe 1, généralement au niveau des poutres 18 de l'inverseur. Ils se situent dans une zone comprise entre le pivot 20 de la porte 7 et l'amont de la poutre 18. Les extrémités opposées des bielles 30 et 35 sont reliées au panneau 22 en des points d'articulation 31 et 37. Ces points d'articulation sont situés entre l'aval et l'amont du panneau 22 selon l'effet recherché. Les quatre points d'articulation 24, 31, 36 et 37 de l'ensemble bielle, palonnier et panneau forment un quadrilatère. Cette disposition permet au flux circulant dans la veine en jet direct d'appliquer son action sur toute la surface du panneau 22 et de le maintenir plaqué contre la structure fixe 1 et contre la porte 7 selon la figure 3. De plus, le sens de balancement du panneau amont 22 permet d'ajouter une composante de refermeture de la porte 7 par l'intermédiaire de la bielle 34.

Selon la figure 4, le panneau amont 22 est entraîné en balancement par le ou les palonnier(s) menant(s) 30 et la ou les bielle(s) guide(s) 35. La bielle intermédiaire 34 transmet la manoeuvre du point 33 sur la porte 7, au point 32 sur le palonnier 30. La bielle 35 solidaire de la structure fixe au point pivot 36 et solidaire du panneau 22 au point pivot 37, guide en permanence ledit panneau dans une orientation définie suivant l'effet recherché par l'homme de l'art.

Il est à préciser que l'orientation dudit panneau amont 22 en position jet inversé est selon l'effet recherché fonction des positions des points pivots 24 et 36 sur la structure fixe 1, des positions des points pivots 31 et 37 sur le panneau 22, des longueurs de bielles 30, 34 et 35 et des emplacements des pivots 32 et 33 de la bielle intermédiaire 34.

Il est à noter également que tous les paramètres définissant la position des différents points pivots mentionnés ci-dessus, ainsi que la longueur des différentes bielles, peuvent être identiques ou différents de chaque côté d'un même panneau 22.

L'effet remarquable dans la position en mode jet inversé est que l'orientation du panneau amont 22 peut être optimisée pour rester, si on le souhaite, la plus proche possible du flux 14 afin de minimiser les perturbations engendrées par la présence dudit panneau dans le flux. Il est à noter que des formes appropriées des parties amont et aval du panneau amont ainsi que de sa paroi interne 43 peuvent également permettre un guidage optimal du flux en position jet inversé.

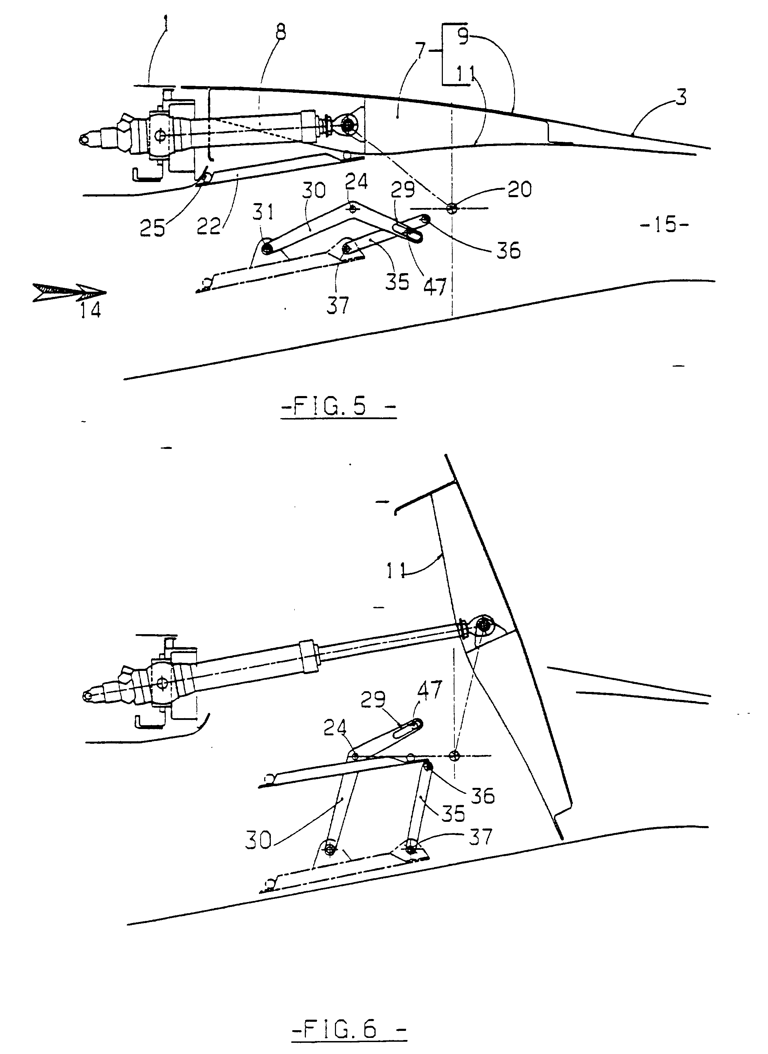

On va décrire en référence aux figures 5 à 10 les modalités particulières propres aux variantes de réalisation où le balancement du panneau 22 se fait comme dans l'exemple décrit ci-dessus en référence aux figures 3 et 4 de l'amont vers l'aval.

Selon les figures 5 et 6 la manoeuvre du palonnier 30 est commandée directement par un galet 47 solidaire de la porte 7 et se déplacant dans une rainure 29 réalisée dans ledit palonnier 30.

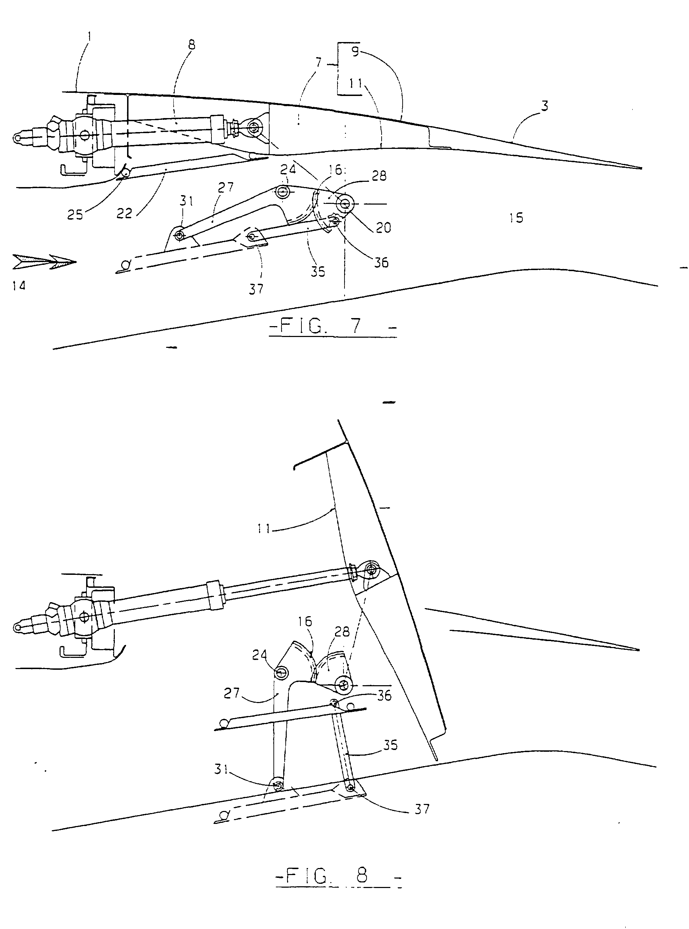

Selon les figures 7 et 8, un palonnier 27 est équipé dans sa partie aval d'un secteur denté 16. Il est entraîné par l'intermédiaire d'un autre secteur denté 28, solidaire de la porte 7, à son pivot 20. Ledit palonnier 27 est solidaire de la structure fixe au point pivot 24 et relié au panneau amont 22 au point d'entraînement 31. La bielle guide 35 a son point fixe de pivot 36 sur la structure fixe 1, et est reliée au panneau amont en un point 37.

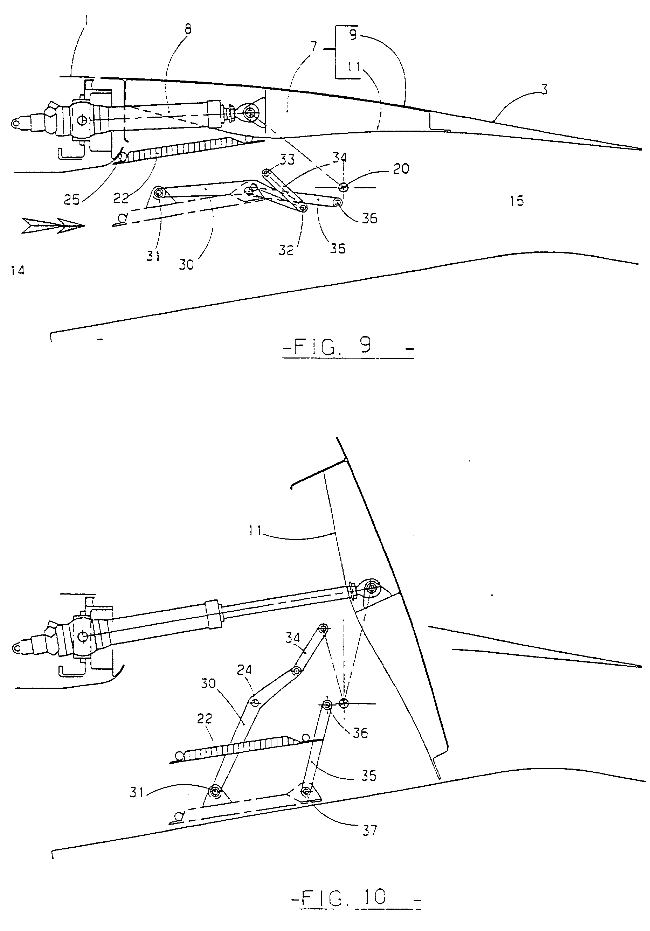

Les figures 9 et 10 représentent un mode de réalisation identique à celui décrit sur les figures 3 et 4, à l'exception du point pivot 36 de la bielle guide 35 qui est dans cette configuration solidaire de la porte 7.

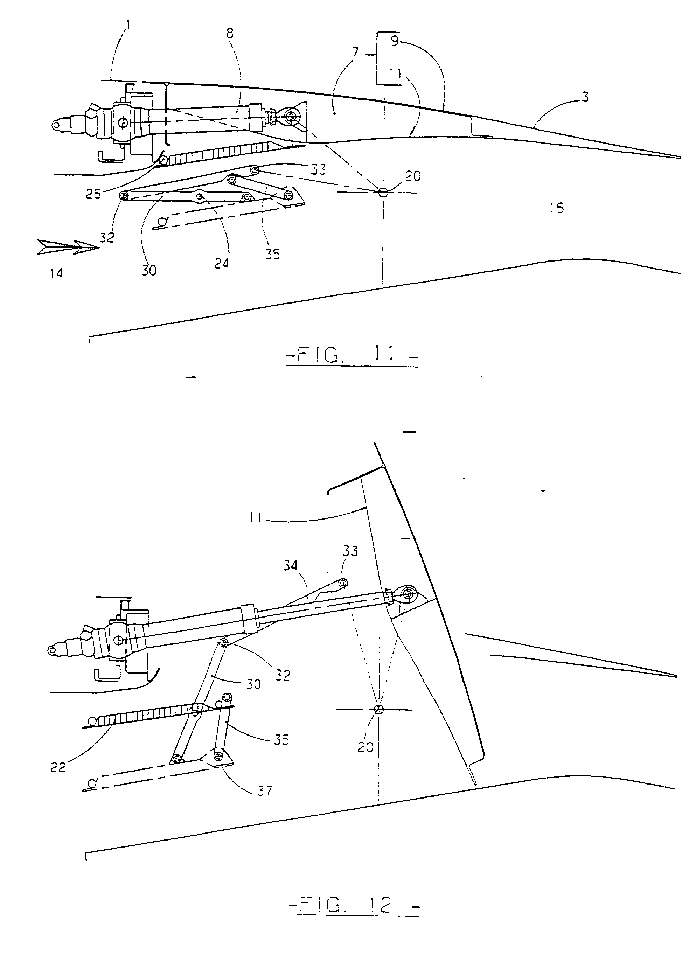

Les figures 11 et 12 représentent un autre exemple d'entraînement permettant de déplacer le panneau 22 de l'aval vers l'amont.

Selon les figures 11 et 12, on peut balancer le panneau amont 22 de l'aval vers l'amont, en fonction des positions des points pivots 24 et 36 sur la structure fixe 1, des positions des points pivots 31 et 37 sur le panneau 22, des longueurs de bielles 30, 34 et 35 et des emplacements des pivots 32 et 33 de la bielle intermédiaire 34.

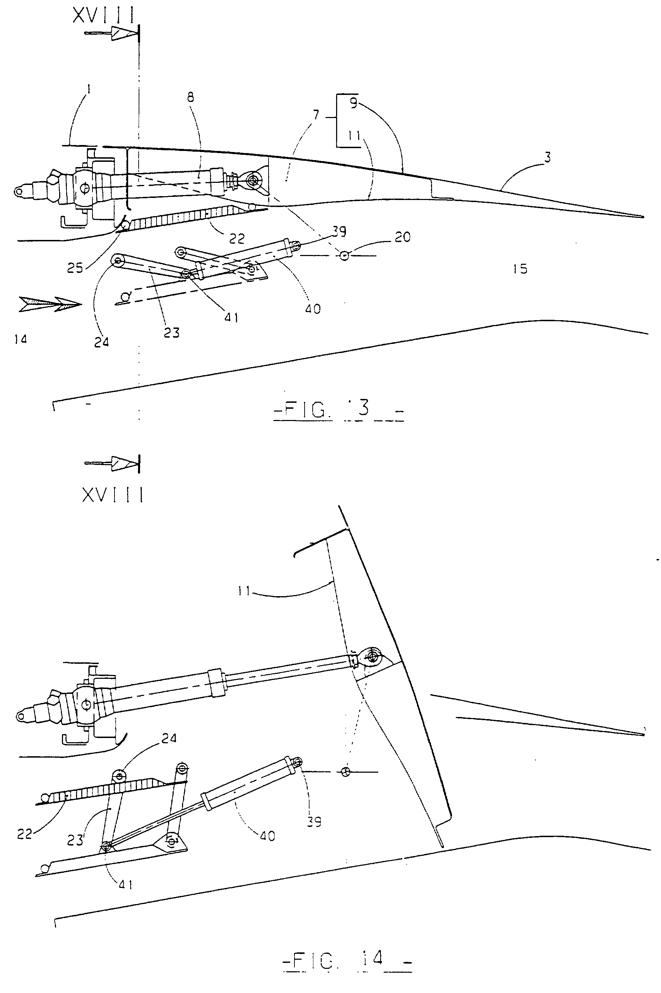

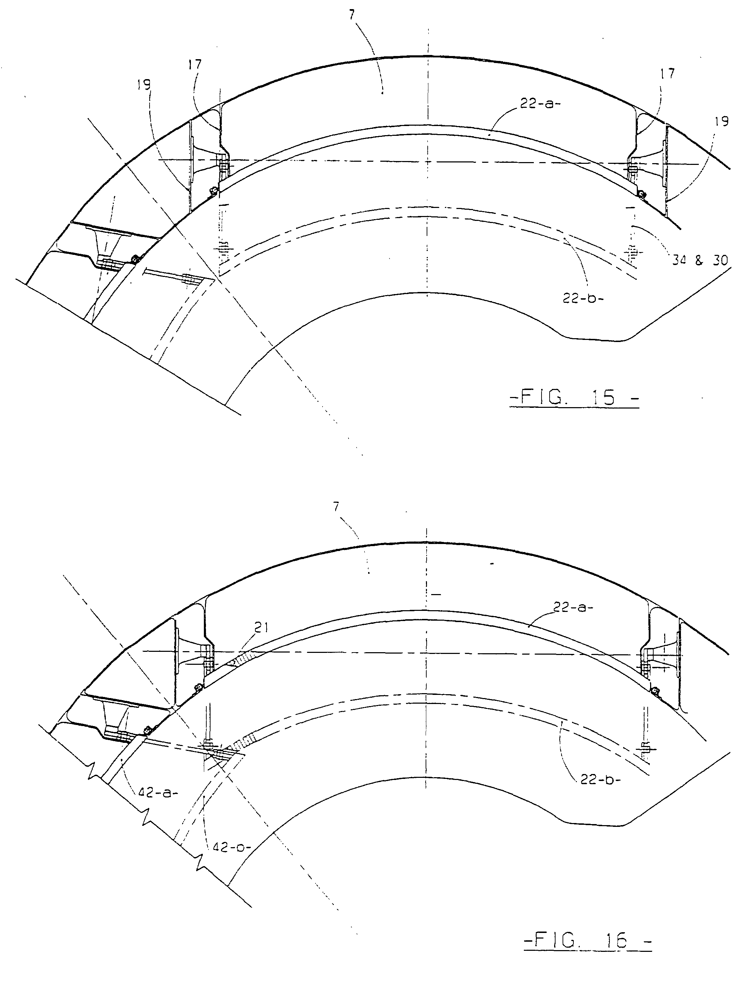

Selon un deuxième mode de réalisation de l'invention représenté sur les figures 13, 14 et 18, on peut dissocier la manoeuvre du panneau 22 de celle de la porte 7. L'entraînement dudit panneau 22 est réalisé par un ou plusieurs vérin(s) indépendant(s) 40 ou bien par un autre système indépendant connu de l'homme du métier. Il peut être relié au point 39 sur les parois latérales 19 de la structure fixe 1. Un ou des vérin(s) 40 peuvent être installés dans la poutre 18, et entraîner le panneau 22 par l'intermédiaire d'un renvoi d'une des bielles 23 ou 35 à l'intérieur de ladite poutre 18. Un seul vérin 40 peut synchroniser la manoeuvre de deux panneaux 22. Le vérin 40 peut être synchronisé avec le système de l'inverseur ou bien totalement indépendant.

Le panneau 22 ainsi rendu libre par rapport à la porte 7 peut être manoeuvré à n'importe quel stade de la phase de jet inversé et ainsi remplir les conditions optimales en fonction des performances recherchées. Le déplacement du panneau 22 peut facilement être ajustable car il n'y a pas l'impératif de cinématique comme rencontré dans les autres systèmes. La manoeuvre du panneau 22 peut même ne pas être actionnée selon l'effet de jet inversé désiré. Cette cinématique peut être différente d'une porte à l'autre, et contribuer ainsi au pilotage des jets sortant de l'inverseur.
Certaines variantes peuvent être appliquées à cette réalisation correspondant aux figures 13, 14 et 18. Un des jeux de bielles 23 ou 35 peuvent être télescopiques ou être remplacées par des vérins. Le vérin 40 peut être supprimé si l'ensemble des bielles 23 et 35 sont remplacées par des vérins. Ces configurations permettent de piloter à volonté la manoeuvre du panneau 22.

Des dispositions complémentaires de la réalisation précédemment décrite en référence notamment aux figures 3 et 4 sont représentées sur la figure 15, sur laquelle le panneau amont 22 est représenté en position jet direct 22a et en position jet inversé 22b, les éléments de commande 34-30 et d'orientation du panneau amont 22 se situent entre une paroi latérale 19 de la structure fixe, et l'une au moins des deux parois latérales 17 de la porte. Les palonniers et bielles sont représentés parallèles à l'axe de la porte 7 et entre-eux, et leurs points d'articulation alignés. Pour des raisons de cinématique ou d'encombrement, lesdits points d'articulation peuvent ne pas être alignés et ou les bielles peuvent présenter une légère incidence avec l'axe de la porte 7.

Selon la figure 16, considérant le panneau amont représenté en position jet direct (22a) et en position jet inversé (22b) comme étant celui de la porte dite supérieure d'un demi inverseur ce panneau possède une découpe 21 permettant le passage du panneau amont de la porte dite inférieure représenté en position jet direct 42a et en position jet inversé 42b, afin de permettre aux deux panneaux de se positionner correctement en position jet inversé sans interférence. A l'inverse, la découpe peut être ménagée sur le panneau de la porte inférieure.

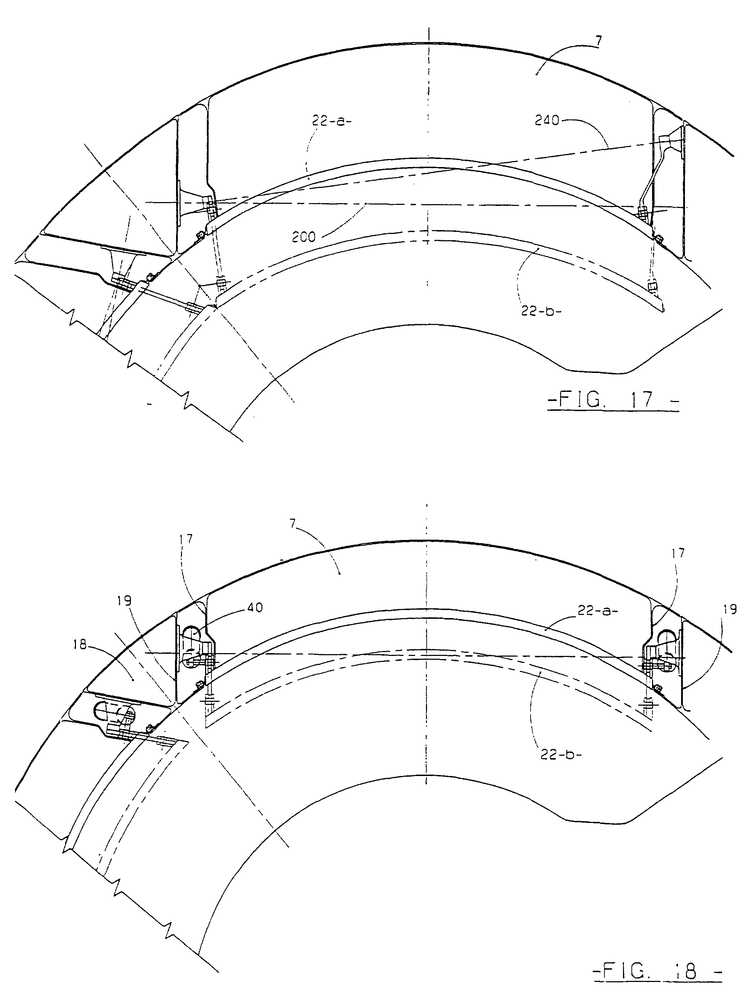

Selon une variante ce réalisation représentée selon la figure 17, sur laquelle le panneau amont 22 est représenté en position jet direct 22a et en position jet inversé 22b, l'axe de rotation 240 passant par les points pivot 24 n'est pas parallèle par rapport à l'axe 200 symbolisant l'axe de rotation de la porte 7 entre ses deux points pivot.

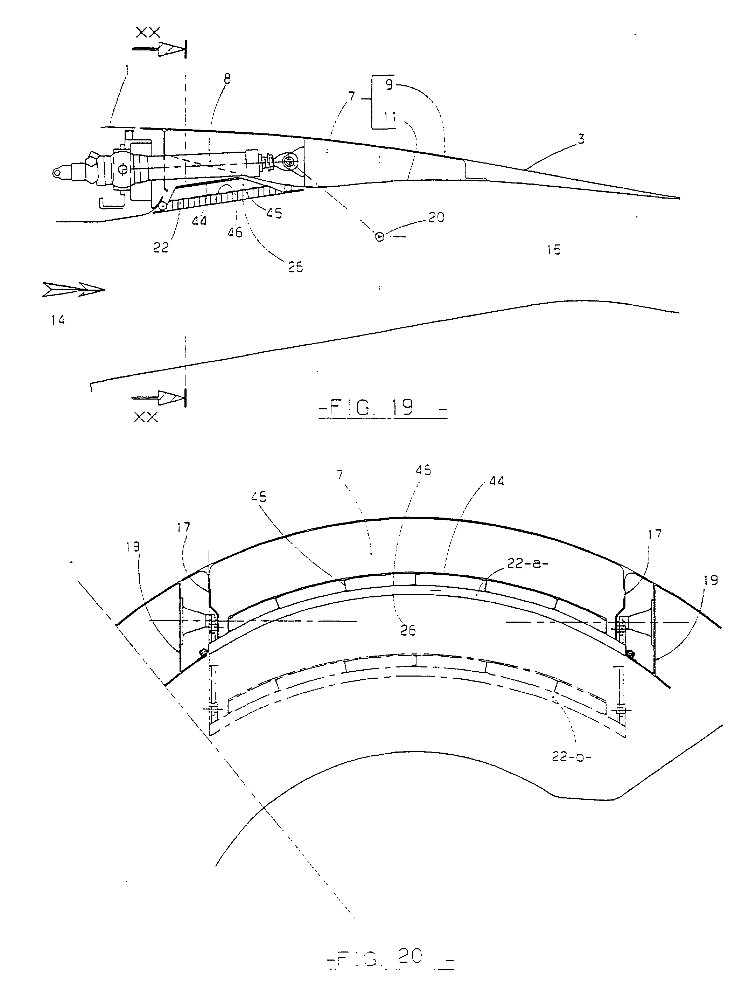

Suivant les figures 19 et 20, une ou plusieurs parois 44 peuvent être associées au panneau amont 22 par l'intermédiaire d'un ou plusieurs supports 45 dans le but d'optimiser le compromis aérodynamique/résistance structurale, et d'améliorer les performances aérodynamiques et le pilotage du jet inversé.

La ou les paroi(s) 44 sont disposées dans le sens longitudinal de l'axe moteur, parallèles ou non par rapport à la paroi externe 46 du panneau amont 22. Elles ont un profil aérodynamique adapté à l'effet recherché en mode jet inversé.

Les supports 45 sont disposés dans le sens longitudinal parallèles ou inclinés par rapport à l'axe moteur, ils peuvent être inclinés ou normaux par rapport à la paroi externe 46 du panneau amont 22. Ils ont des profils aérodynamiques adaptés à l'effet recherché en mode jet inversé, ou au pilotage de jet recherché.

La ou les paroi(s) 44 ainsi que le ou les support(s) 45 peuvent être de nombre, de forme, de hauteur et/ou de largeur différents d'un panneau 22 à l'autre et entre eux. Leur largeur peut évoluer selon l'envergure du panneau 22. La paroi 44 peut occuper tout ou partie de la paroi externe 46 du panneau suivant le but recherché.

Suivant le même principe que décrit précédemment, la paroi 44 peut également recevoir sur sa surface externe un ou plusieurs supports 45 permettant le montage d'une ou plusieurs autres parois en fonction de la résistance structurale et des performances aérodynamiques recherchées. Certaines des dispositions et des variantes de l'invention précédemment décrites peuvent bien entendu être utilisées seules ou en association entre elles sur un inverseur de poussée.
Notamment en vue d'une amélioration du pilotage des nappes lors d'un fonctionnement en inversion de poussée, ces dispositions associées permettent d'avoir des portes 7 associées à des panneaux 22 ayant des positions et des angles d'ouverture différents entre eux.

## Revendications

1. Inverseur de poussée de turboréacteur à double flux comportant des portes pivotantes (7) s'intégrant en position fermée, lors d'un fonctionnement en jet direct, dans la paroi extérieure du conduit de flux en arrière de la soufflante de turboréacteur, et en outre chacune pivotant sous l'action d'un moyen de commande (8) des déplacements de manière à constituer des obstacles de déviation de flux lors d'un fonctionnement en inversion de poussée, la partie amont de chaque porte (7) étant doublée sur sa face interne, en position fermée, par un panneau amont (22) assurant un lissage de la veine fluide en jet direct **caractérisé en ce que** ledit panneau amont (22) est supporté et relié d'une part par au moins une bielle (35) à la structure fixe (1) de l'inverseur et d'autre part par au moins une bielle (34) à la porte (7) associée.

2. Inverseur de poussée de turboréacteur à double flux selon la revendication 1 dans lequel le support du panneau amont (22) est réalisé de manière que les faces du panneau amont (22) dans toutes les phases de fonctionnement conservent une orientation parallèle aux nappes du flux (14) en contact avec ledit panneau (22).

3. Inverseur de poussée de turboréacteur à double flux selon l'une des revendications 1 ou 2 dans lequel ledit panneau amont (22) est supporté et déplacé par au moins un jeu comportant bielle (35) et palonnier (30), la bielle (35) étant articulée à une extrémité (37) sur le panneau (22) et à l'autre extrémité (36) sur la structure fixe (1) de l'inverseur et le palonnier (30) pivotant autour d'un pivot (24) solidaire de ladite structure fixe (1) et étant articulé à une extrémité (31) sur le panneau (22) et à l'autre extrémité (32) sur une bielle intermédiaire (34) elle-même articulée à son autre extrémité (33) sur la porte (7), les positions du panneau (22) sont déterminées en fonction des effets recherchés par les longueurs de bielles (35, 30, 34) et les emplacements d'articulations (24, 36, 37, 31, 32, 33).

4. Inverseur de poussée de turboréacteur à double flux selon l'une des revendications 1 ou 2 dans lequel ledit panneau amont (22) est supporté et déplacé par au moins un jeu comportant bielle (35) et palonnier (30), la bielle étant articulée à une extrémité (37) sur le panneau (22) et à l'autre extrémité (36) sur la structure fixe (1) de l'inverseur et le palonnier (30) pivotant autour d'un pivot (24) solidaire de ladite structure fixe (1) et étant articulé à une extrémité (31) sur le panneau (22) et à l'autre extrémité comportant une rainure (29) sur un galet (47) solidaire de la porte (7).

5. Inverseur de poussée de turboréacteur à double flux selon l'une des revendications 1 ou 2 dans lequel ledit panneau amont (22) est supporté et déplacé par au moins un jeu comportant bielle (35) et palonnier (27), la bielle (35) étant articulée à une extrémité (37) sur le panneau (22) et à l'autre extrémité (36) sur la structure fixe (1) de l'inverseur et le palonnier (27) pivotant autour d'un pivot (24) solidaire de ladite structure fixe (1) et étant articulé à une extrémité (31) sur le panneau (22) et comportant à son autre extrémité un secteur denté (16) coopérant avec un autre secteur denté (28) solidaire du pivot (20) de la porte (7).

6. Inverseur de poussée de turboréacteur à double flux selon les revendications 1 ou 2 dans lequel ledit panneau amont (22) est supporté et déplacé par au moins un jeu comportant bielle (35) et palonnier (30), la bielle (35) étant articulée à une extrémité (37) sur le panneau (22) et à l'autre extrémité (36) sur la porte (7) et le palonnier (30) pivotant autour d'un pivot (24) solidaire de ladite structure fixe (1) et étant articulé à une extrémité (31) sur le panneau (22) et à l'autre extrémité (32) sur une bielle intermédiaire (34) elle-même articulée à son autre extrémité (33) sur la porte (7).

7. Inverseur de poussée de turboréacteur à double flux selon l'une des revendications 1 ou 2 **caractérisé en ce que** ledit panneau amont (22) est entraîné de manière indépendante de la porte (7) par au moins un vérin (40) fixé sur ladite structure fixe (1) de l'inverseur.

8. Inverseur de poussée de turboréacteur à double flux selon l'une quelconque des revendications 1 à 7 dans lequel au moins un des points d'articulation (24, 36) de bielle disposés sur la structure fixe (1) de l'inverseur sont placés sur les poutres longitudinales (18) de l'inverseur.

9. Inverseur de poussée de turboréacteur à double flux selon l'une des révendications 1 ou 2 **caractérisé en ce que** ledit panneau amont (22) est supporté par au moins un jeu comportant un vérin amont et un vérin aval fixés sur la structure fixe (1) de l'inverseur et entraînant ledit panneau (22) de manière indépendante de la porte (7)

10. Inverseur de poussée de turboréacteur à double flux selon l'une quelconque des revendications 1 à 9 dans lequel le panneau amont (22a) comporte une découpe (21) permettant un déplacement sans interférence entre ledit panneau (22b) et le panneau (42b) associé à la porte voisine de l'inverseur de poussée.

11. Inverseur de poussée de turboréacteur à double flux selon l'une quelconque des revendications 1 à 10 dans lequel le panneau amont (22) constitué d'un élément de type sandwich composé d'une paroi interne (26) et d'une paroi externe (46) reliées entre elles comporte en outre au moins une paroi supplémentaire externe (44) reliée à ladite paroi externe (46) par des supports (45)

## Patentansprüche

1. Schubumkehrvorrichtung für ein Zweikreis-Turbostrahltriebwerk mit schwenkbaren Klappen (7), die sich in Schließstellung im Direkstrahlbetrieb in die Außenwand der Strömungsleitung hinter dem Rotor des Turbostrahltriebwerks einfügen und unter der Einwirkung einer Stellantriebsvorrichtung (8) so verschwenkbar sind, daß sie im Schubumkehrbetrieb Hindernisse zum Ablenken der Strömung bilden, wobei der stromaufwärtige Teil jeder Klappe (7) in Schließstellung mit einer stromaufwärtigen Auskleidung (22) hinterlegt ist, die eine Glättung des Fluidstroms im Direkstrahlbetrieb ermöglicht, **dadurch gekennzeichnet, daß** die stromaufwärtige Auskleidung (22) einerseits durch wenigstens ein Pleuel (35) mit der festen Struktur (1) der Schubumkehrvorrichtung und andererseits durch wenigstens ein Pleuel (34) mit der zugehörigen Klappe (7) verbunden ist.

2. Schubumkehrvorrichtung für ein Zweikreis-Turbostrahltriebwerk nach Anspruch 1, bei der die Abstützung der stromaufwärtigen Auskleidung (22) so ausgebildet ist, daß die Seiten der stromaufwärtigen Auskleidung (22) in allen Betriebsphasen eine Orientierung parallel zu den Strömungsschichten (14) beibehalten, die mit der Auskleidung (22) in Kontakt stehen.

3. Schubumkehrvorrichtung für ein Zweikreis-Turbostrahltriebwerk nach Anspruch 1 oder 2, bei der die stromaufwärtige Auskleidung (22) von wenigstens einer Baugruppe gehalten und bewegt wird, die ein Pleuel (25) und ein Ausgleichsgestänge (30) umfaßt, wobei das Pleuel (35) mit einem Ende (37) an der Auskleidung (22) und mit dem anderen Ende (36) an der festen Struktur (1) der Schubumkehrvorrichtung angelenkt ist, und wobei das Ausgleichsgestänge (30) um einen mit der festen Struktur (1) fest verbundenen Drehzapfen (24) drehbar ist und mit einem Ende (31) an der Auskleidung (22) und mit dem anderen Ende (32) an einem Zwischenpleuel (24) angelenkt ist, das seinerseits mit seinem anderen Ende (33) an der Klappe angelenkt ist, wobei die Positionen der Auskleidung (22) in Abhängigkeit von den angestrebten Wirkungen durch die Längen der Pleuel (35, 30, 34) und die Orte der Gelenkverbindungen (24, 36, 37, 31, 32, 33) festgelegt sind.

4. Schubumkehrvorrichtung für ein Zweikreis-Turbostrahltriebwerk nach Anspruch 1 oder 2, bei der die stromaufwärtige Auskleidung (22) von wenigstens einer Baugruppe gehalten und bewegt wird, die ein Pleuel (25) und ein Ausgleichsgestänge (30) umfaßt, wobei das Pleuel (35) mit einem Ende (37) an der Auskleidung (22) und mit dem anderen Ende (36) an der festen Struktur (1) der Schubumkehrvorrichtung angelenkt ist, und wobei das Ausgleichsgestänge (30) um einen mit der festen Struktur (1) fest verbundenen Drehzapfen (24) drehbar ist und mit einem Ende (31) mit der Auskleidung (22) und mit dem anderen Ende, das einen Schlitz (29) aufweist, mit einer Leitrolle (47) gelenkig verbunden ist, die mit der Klappe (7) fest verbunden ist.

5. Schubumkehrvorrichtung für ein Zweikreis-Turbostrahltriebwerk nach Anspruch 1 oder 2, bei der die stromaufwärtige Auskleidung (22) von wenigstens einer Baugruppe gehalten und bewegt wird, die ein Pleuel (25) und ein Ausgleichsgestänge (30) umfaßt, wobei das Pleuel (35) mit einem Ende (37) an der Auskleidung (22) und mit dem anderen Ende (36) an der festen Struktur (1) der Schubumkehrvorrichtung angelenkt ist, und wobei das Ausgleichsgestänge (30) um mit der festen Struktur (1) fest verbundenen Drehzapfen (24) drehbar ist und mit einem Ende (31) an der Auskleidung (22) angelenkt ist und an ihrem anderen Ende einen Zahnsektor (16) aufweist, der mit einem anderen Zahnsektor (28) zusammenwirkt, der mit dem Drehzapfen (20) der Klappe (7) fest verbunden ist,

6. Schubumkehrvorrichtung für ein Zweikreis-Turbostrahltriebwerk nach Anspruch 1 oder 2, bei der die stromaufwärtige Auskleidung (22) von wenigstens einer Baugruppe gehalten und bewegt wird, die ein Pleuel (25) und ein Ausgleichsgestänge (30) umfaßt, wobei das Pleuel (35) mit einem Ende (37) an der Auskleidung (22) und mit dem anderen Ende (36) an der festen Struktur (1) angelenkt ist, und wobei das Ausgleichsgestänge (30) um einen mit der festen Struktur (1) fest verbundenen Drehzapfen (24) drehbar ist und mit einem Ende (31) an der Auskleidung (22) und mit dem anderen Ende (32) an einem Zwischenpleuel (34) angelenkt ist, das seinerseits mit seinem anderen Ende an der Klappe (7) angelenkt ist.

7. Schubumkehrvorrichtung für ein Zweikreis-Turbostrahltriebwerk nach einem der Ansprüche 1 oder 2, **dadurch gekennzeichnet, daß** die stromaufwärtige Auskleidung (22) unabhängig von der Klappe (7) von wenigstens einem Antriebszylinder (40) angetrieben wird, der an der festen Struktur (1) der Schubumkehrvorrichtung befestigt ist.

8. Schubumkehrvorrichtung für ein Zweikreis-Turbostrahltriebwerk nach einem der Ansprüche 1 bis 7, bei der wenigstens einer der Pleuel-Gelenkpunkte (24, 36), die an der festen Struktur (1) der Schubumkehrvorrichtung angeordnet sind, auf den Längsträgern (18) der Schubumkehrvorrichtung liegen.

9. Schubumkehrvorrichtung für ein Zweikreis-Turbostrahltriebwerk nach einem der Ansprüche 1 oder 2, **dadurch gekennzeichnet, daß** die stromaufwärtige Auskleidung (22) von wenigstens einer Baugruppe getragen wird, die einen stromaufwärtigen Antriebszylinder und einen stromabwärtigen Antriebszylinder umfaßt, die an der festen Struktur (1) der Schubumkehrvorrichtung befestigt sind und die Auskleidung (22) unabhängig von der Klappe (7) antreiben.

10. Schubumkehrvorrichtung für ein Zweikreis-Turbostrahltriebwerk nach einem der Ansprüche 1 bis 7, bei der die stromaufwärtige Auskleidung (22a) einen Ausschnitt (21) besitzt, der eine Bewegung zwischen der Auskleidung (22b) und der der benachbarten Klappe (7) der Schubumkehrvorrichtung zugeordneten Auskleidung (42b) ohne gegenseitige Behinderung ermöglicht.

11. Schubumkehrvorrichtung für ein Zweikreis-Turbostrahltriebwerk nach einem der Ansprüche 1 bis 10, bei der die stromaufwärtige Auskleidung (22), die aus einem Sandwichelement besteht, das aus einer Innenwand (26) und einer Außenwand (46) zusammengesetzt ist, die miteinander verbunden sind, außerdem wenigstens eine zusätzliche Außenwand Wand (44) aufweist, die durch Stützen (45) mit der Außenwand (46) verbunden ist.

## Claims

1. Bypass turbojet thrust reverser comprising pivoting doors (7) incorporating themselves, in the closed position, during operation in direct jet mode, into the outer wall of the flow duct behind the turbojet fan, and also each pivoting under the action of a movement-control means (8) so as to constitute obstacles deflecting the flow during operation in reverse thrust mode, the upstream part of each door (7) being lined on its internal face, in the closed position, by an upstream panel (22) that smoothes the fluid stream in direct jet mode, **characterized in that** the said upstream panel (22) is supported and connected, on the one hand, by at least one connecting rod (35), to the fixed structure (1) of the reverser and, on the other hand, by at least one connecting rod (34), to the associated door (7).

2. Bypass turbojet thrust reverser according to Claim 1, in which the support of the upstream panel (22) is produced in such a way that the faces of the upstream panel (22) in all phases of operation maintain an orientation parallel to the flow layers (14) in contact with the said panel (22).

3. Bypass turbojet thrust reverser according to either of Claims 1 and 2, in which the said upstream panel (22) is supported and moved by at least one set comprising a connecting rod (35) and a balance beam (30), the connecting rod (35) being articulated at one end (37) to the panel (22) and at the other end (36) to the fixed structure (1) of the reverser and the balance beam (30) pivoting about a pivot (24) secured to the said fixed structure (1) and being articulated at one end (31) to the panel (22) and at the other end (32) to an intermediate connecting rod (34) itself articulated at its other end (33) to the door (7), the positions of the panel (22) are determined according to the desired effects by the lengths of the connecting rods (35, 30, 34) and the locations of the articulations (24, 36, 37, 31, 32, 33).

4. Bypass turbojet thrust reverser according to, either of Claims 1 and 2, in which the said upstream panel (22) is supported and moved by at least one set comprising a connecting rod (35) and a balance beam (30), the connecting rod being articulated at one end (37) to the panel (22) and at the other end (36) to the fixed structure (1) of the reverser and the balance beam (30) pivoting about a pivot (24) secured to the said fixed structure (1) and being articulated at one end (31) to the panel (22) and at the other end, comprising a groove (29), to a roller (47) secured to the door (7).

5. Bypass turbojet thrust reverser according to either of Claims 1 and 2, in which the said upstream panel (22) is supported and moved by at least one set comprising a connecting rod (35) and a balance beam (27), the connecting rod (35) being articulated at one end (37) to the panel (22) and at the other end (36) to the fixed structure (1) of the reverser and the balance beam (27) pivoting about a pivot (24) secured to the said fixed structure (1) and being articulated at one end (31) to the panel (22) and at its other end comprising a toothed sector (16) collaborating with another toothed sector (28) secured to the pivot (20) of the door (7).

6. Bypass turbojet thrust reverser according to Claim 1 or 2, in which the said upstream panel (22) is supported and moved by at least one set comprising a connecting rod (35) and a balance beam (30), the connecting rod (35) being articulated at one end (37) to the panel (22) and at the other end (36) to the door (7) and the balance beam (30) pivoting about a pivot (24) secured to the said fixed structure (1) and being articulated at one end (31) to the panel (22) and at the other end (32) to an intermediate connecting rod (34) itself articulated at its other end (33) to the door (7).

7. Bypass turbojet thrust reverser according to either of Claims 1 and 2, **characterized in that** the said upstream panel (22) is driven independently of the door (7) by at least one ram (40) fixed to the said fixed structure (1) of the reverser.

8. Bypass turbojet thrust reverser according to any one of Claims 1 to 7, in which at least one of the connecting rod articulation points (24, 36) arranged on the fixed structure (1) of the reverser are placed on the longitudinal beams (18) of the reverser.

9. Bypass turbojet thrust reverser according to either of Claims 1 and 2, **characterized in that** the said upstream panel (22) is supported by at least one set comprising an upstream ram and a downstream ram which are fixed to the fixed structure (1) of the reverser and drive the said panel (22) independently of the door (7).

10. Bypass turbojet thrust reverser according to any one of Claims 1 to 9, in which the upstream panel (22a) has a cut-out (21) allowing interference-free relative movement of the said panel (22b) and of the panel (42b) associated with the adjacent door of the thrust reverser.

11. Bypass turbojet thrust reverser according to any one of Claims 1 to 10 in which the upstream panel (22), consisting of an element of sandwich type made up of an internal wall (26) and of an external wall (46) joined together, further comprises at least one additional external wall (44) connected to the said external wall (46) by supports (45).
